# EUROPÄISCHE PATENTSCHRIFT

(11) **EP 3 618 242 B1**
(45) Veröffentlichungstag und Bekanntmachung des Hinweises auf die Patenterteilung: **17.08.2022**
(21) Anmeldenummer: 19194110.3
(22) Anmeldetag: 28.08.2019
(51) Int. Cl.: H02K 11/25, H02K 5/10

(54) **WECHSELBARE TEMPERATURERFASSUNGSEINHEIT FÜR EINEN STATOR EINES ELEKTROMOTORS**
REPLACEABLE TEMPERATURE DETECTION UNIT FOR AN ELECTRIC MOTOR STATOR
UNITÉ DE DÉTECTION DE TEMPÉRATURE REMPLAÇABLE POUR UN STATOR D'UN MOTEUR ÉLECTRIQUE

(30) Priorität: 31.08.2018 DE 102018121356
(43) Veröffentlichungstag der Anmeldung: 04.03.2020
(73) Patentinhaber: Valeo Siemens eAutomotive Germany GmbH, 91056 Erlangen (DE)
(72) Erfinder: BALLING, Florian, 97616 Bad Neustadt (DE); FINGER-ALBERT, Christian, 97688 Bad Kissingen (DE); OETZEL, Stefan, 98574 Schmalkalden (DE); MENZ, Michael, 97618 Hollstadt (DE)
(74) Vertreter: Novembre, Christophe Adelphe

(56) Entgegenhaltungen:
- EP-A1- 2 306 622
- EP-A1- 2 306 622
- EP-A2- 2 830 179
- WO-A1-2016/067156
- WO-A1-2016/067156
- WO-A1-2018/019474
- WO-A1-2018/019474
- DE-A1-102011 084 229
- DE-A1-102015 203 435
- DE-A1-102015 203 435
- GB-A- 767 383
- JP-A- 2011 254 628

## Beschreibung

Die Erfindung betrifft eine wechselbare Temperaturerfassungseinheit für einen Stator eines Elektromotors.

### Stand der Technik

Elektromotoren sind allgemein bekannt und finden zunehmend Anwendung für den Antrieb von Fahrzeugen. Ein Elektromotor besteht aus einem Stator und einem Rotor.

Der Stator umfasst eine Vielzahl von Slots, in denen die Windungen geführt werden. Im Wicklungskopf laufen die Windungen zusammen und werden verbunden. Es ist für den Betrieb des Elektromotors nötig, die Temperatur im Stator zu überwachen. Dies kann durch messen der Temperatur der Windungen oder des Wickelkopfes erfolgen.

DE 10 2011 084 229 A1 offenbart einen Elektromotor mit einem Gehäuse sowie einem Stator. Ein Temperatursensor mit Befestigungsvorrichtung, Anschlussvorrichtung sowie einem Sensorelement ist an dem Gehäuse montiert. Dabei steht der Temperatursensor in thermischer Verbindung mit einer Wicklung des Stators. Die Befestigungsvorrichtung ist in einer Öffnung eines Gehäuseabschnitts angeordnet. Eine Dichtung schließt die Öffnung für den Temperatursensor dichtend ab.

DE 10 2015 203 435 A1 offenbart einen Temperatursensor für elektrische Maschinen. An einem ersten Ende weist der Temperatursensor einen Hauptkörper auf. Der Hauptkörper weist einen Befestigungsbereich mit einem Absatz auf. Der Befestigungsbereich bzw. der Absatz helfen, den Temperatursensor ortsfest in einer elektrischen Maschine zu befestigen. In einem Übergangsbereich zwischen dem ersten Ende und dem zweiten Ende ist ein Sensorelement angeordnet.

### Aufgabe und Lösung

Aufgabe der vorliegenden Erfindung ist es, eine wechselbare Temperaturerfassungseinheit bereitzustellen, mit der die Temperatur des Wicklungskopfs im Stator effizient ermittelbar ist.

Diese Aufgabe wird erfindungsgemäß durch einen Elektromotor gemäß Anspruch 1 gelöst. Vorteilhafte Ausgestaltungen sind Gegenstand der abhängigen Ansprüche.

Erfindungsgemäß umfasst eine Temperaturerfassungseinheit für einen Stator eines Elektromotors eine Platte, ein Stützelement, mindestens zwei Füße und mindestens zwei Temperatursensoren, wobei jeweils ein Temperatursensor an jeweils einem der Füße angeordnet ist.

Mit diesem Aufbau der Temperaturerfassungseinheit können die Temperatursensoren beispielsweise nach einem Defekt aus dem Stator bzw. Lagerschild entfernt oder beispielsweise erst nach einem Anschluss der Wicklungen in den Stator bzw. das Lagerschild eingebracht werden.

Erfindungsgemäß ist an der Platte mindestens ein Dichtelement angeordnet, wobei das Dichtelement einen über die Platte hinausstehenden Bereich aufweist.

Mit dem Dichtelement wird das Eindringen von Feuchtigkeit zwischen Wicklungskopf und den Temperatursensoren verhindert. Dies erhöht die Betriebssicherheit.

In einer weiteren Ausgestaltung der Erfindung können die Füße jeweils eine Ausnehmung aufweisen und in jeder dieser Ausnehmungen mindestens ein Temperatursensor angeordnet sein.

Die Ausnehmungen können in Richtung des Wicklungskopfs geöffnet sein und betten die Temperatursensoren ein. Dadurch ist einerseits ein direkter Kontakt zwischen dem Wicklungskopf und den Temperatursensoren möglich und andererseits sind die Temperatursensoren durch die Füße auf der dem Wicklungskopf abgewandten Seite umschlossen.

In einer weiteren bevorzugten Ausgestaltung der Erfindung kann zwischen der Platte und dem Stützelement ein weiteres Dichtelement angeordnet sein.

Dieses weitere Dichtelement erhöht die Widerstandsfähigkeit der Platte gegen Feuchtigkeit.

Bevorzugt kann durch die Füße und das die Platte durchstoßende Stützelement ein Kanal verlaufen und in diesem Kanal ein Leiter geführt sein.

Durch die Platte hindurch können somit die Signale von den Temperatursensoren an ein externes Steuergerät weitergegeben werden. Eine Signalverarbeitung kann dann außerhalb des Stators bzw. Elektromotors erfolgen.

Erfindungsgemäß ist zwischen dem Stützelement und den Füßen ein Querelement angeordnet, das die Füße beabstandet.

Mit beabstandeten Füßen kann beispielweise die Temperatur von Wicklungen auf unterschiedlichen Seiten des Stators gemessen werden. Beispielsweise erfolgt eine Temperaturmessung auf der Innenseite des Wicklungskopfes und einmal auf der Außenseite des Wicklungskopfes.

Mit beabstandeten Füßen kann alternativ die Temperatur von Wicklungen gemessen werden, die von verschiedenen Phasen eines Inverters gespeist werden.

In einer weiteren Ausgestaltung der Erfindung kann die Temperaturerfassungseinheit drei Füße mit drei Temperatursensoren aufweisen. Zwei Füße sind gegenüber und ein weiterer Fuß neben einem anderen Fuß angeordnet. Mit dieser Ausgestaltung kann sowohl die Temperatur in Innen- und Außendurchmesser des Wicklungskopfes als auch von neben anderer liegenden mit unterschiedlichen Phasen gespeisten Windungen gemessen werden. Dies stellt beispielsweise eine Kombination der Ausführungsform mit den gegenüberliegenden Füßen und den nebeneinanderliegenden Füßen dar.

Erfindungsgemäß umfasst der Elektromotor einen Stator mit einem Wicklungskopf, einem Lagerschild und die Temperaturerfassungseinheit, wobei die Füße am Wicklungskopf anliegen und die Platte in Wirkverbindung mit dem Lagerschild steht.

Durch die Wirkverbindung der Platte mit dem Lagerschild ist ein Auswechseln der Temperaturerfassungseinheit während der Lebensdauer des Elektromotors möglich. Ferner kann die Temperaturerfassungseinheit auch erst nach einem kompletten Verguss des Stators eingesetzt werden.

Bei einem Einsatz nach dem Verguss des Stators ist es vorteilhaft eine negative Maske der Temperaturerfassungseinheit beim Vergießen des Stator zu nutzen.

Bevorzugt kann das Querelement auf dem Wicklungskopf aufliegen oder teilweise in den Wicklungskopf eingedrückt sein.

Ein auf dem Wicklungskopf aufliegendes Querelement stellt eine definierte Position der Temperaturerfassungseinheit sicher und kann zusätzlich eine Positionsänderung der Temperaturerfassungseinheit verhindert. Mittels dieser definierten Position kann außerdem die Genauigkeit der Temperaturmessung verbessert werden, da ein definierter Abstand zwischen den Temperatursensoren und dem Wicklungskopf eingehalten wird.

Ein in den Wicklungskopf eingedrücktes Querelement kann den Halt der Temperaturerfassungseinheit im Lagerschild verbessern.

Weiter bevorzugt kann das Stützelement in einem Raum zwischen Wicklungskopf und Lagerschild angeordnet sein.

In diesem Räum kann beispielsweise eine Verschaltungsplatte angeordnet sein, die die Sternpunkte der einzelnen Wicklungen verbindet. Das Stützelement in diesem Raum ermöglicht einerseits die nahe Lage der Temperatursensoren an den Wicklungsköpfen, andererseits kann die Temperaturerfassungseinheit aus diesem Raum auch wieder entfernt werden, da das Stützelement die Platte mit den Füßen verbindet.

Erfindungsgemäß weist ein Fahrzeug einen Elektromotor gemäß einer der bevorzugten Ausgestaltungen des Elektromotors auf.

### Figurenbeschreibung

Figur 1 zeigt eine Temperaturerfassungseinheit in mehreren Ansichten.
Figur 2 zeigt eine Temperaturerfassungseinheit in einer schrägen Draufsicht.
Figur 3 zeigt eine in einem Lagerschild eingebaute Temperaturerfassungseinheit in einem Querschnitt und einer Draufsicht.
Figur 4 zeigt eine alternative Ausführungsform der Temperaturerfassungseinheit in mehreren Ansichten.
Figur 5 zeigt eine in einem Lagerschild eingebaute alternative Temperaturerfassungseinheit in einem Querschnitt und einer Draufsicht.
Figur 6 zeigt einen Elektromotor mit einem Stator, einem Lagerschild und einer Temperaturerfassungseinheit in einem Fahrzeug.

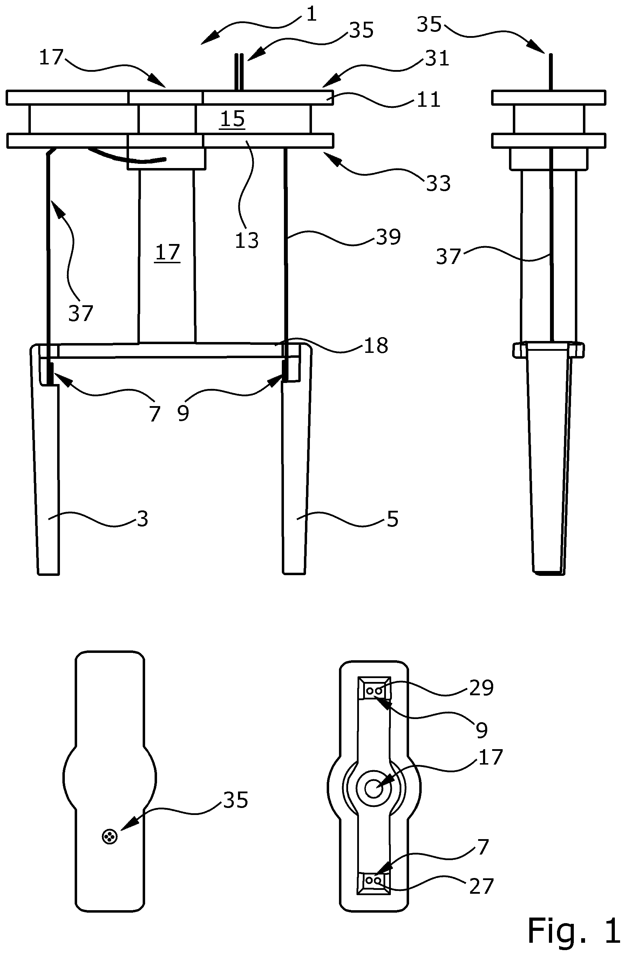

Figur 1 zeigt eine Temperaturerfassungseinheit 1 in einer Frontalansicht, einer Seitenansicht, einer Draufsicht und einer Ansicht von unten. Die Temperaturerfassungseinheit 1 besteht aus einer Platte 15, einem Stützelement 17, einem Querelement 18 und zwei Füßen 3, 5. An der Platte 15 sind oberhalb und unterhalb jeweils ein Dichtelement 11, 13 angeordnet. Die Dichtelemente 11, 13 überragen die Platte 15 an den Seiten 31, 33. Das Stützelement 17 erstreckt sich durch die Platte 15 und die beiden Dichtelemente 11, 13.

Ferner weist die Platte 15 und die Dichtelemente 11, 13 eine Ausnehmung für mehrere Leiter 35 auf. Die Leiter 35 verlassen die Platte 15 in Richtung der Füße 3, 5. Die Füße 3, 5 weisen Ausnehmungen 7, 9 auf, in denen Temperatursensoren angeordnet sind. Die Leiter 35 verlaufen getrennt voneinander 37, 39 und sind an die Temperatursensoren angeschlossen.

In der Ansicht von unten sind die beiden in den Ausnehmungen 7, 9 der Füße 3, 5 angeordneten Temperatursensoren 27, 29 zu sehen.

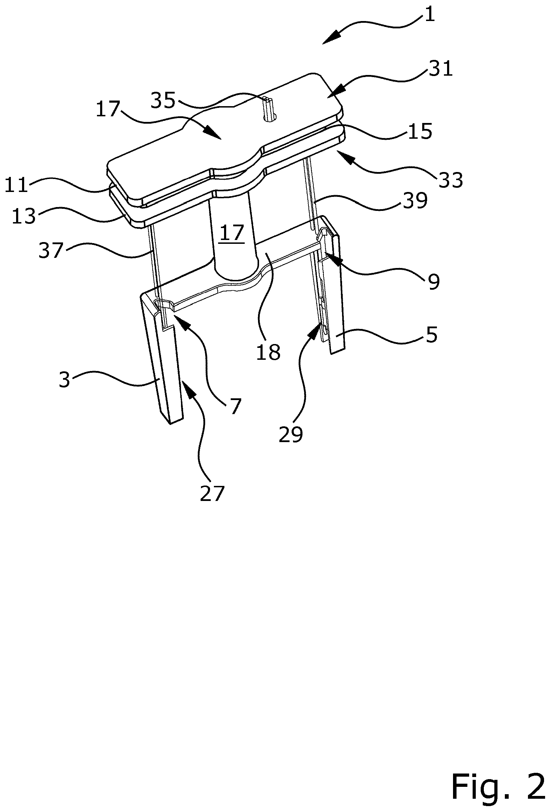

Figur 2 zeigt eine schräge Draufsicht auf die Temperaturerfassungseinheit 1. Deutlich zu sehen sind die Ausnehmungen 7, 9 in den beiden Füßen 3, 5 für die beiden Temperatursensoren 27, 29. Über die Leiter 35, 37, 39 sind die Temperatursensoren 27, 29 an eine nicht gezeigte Steuereinrichtung angeschlossen.

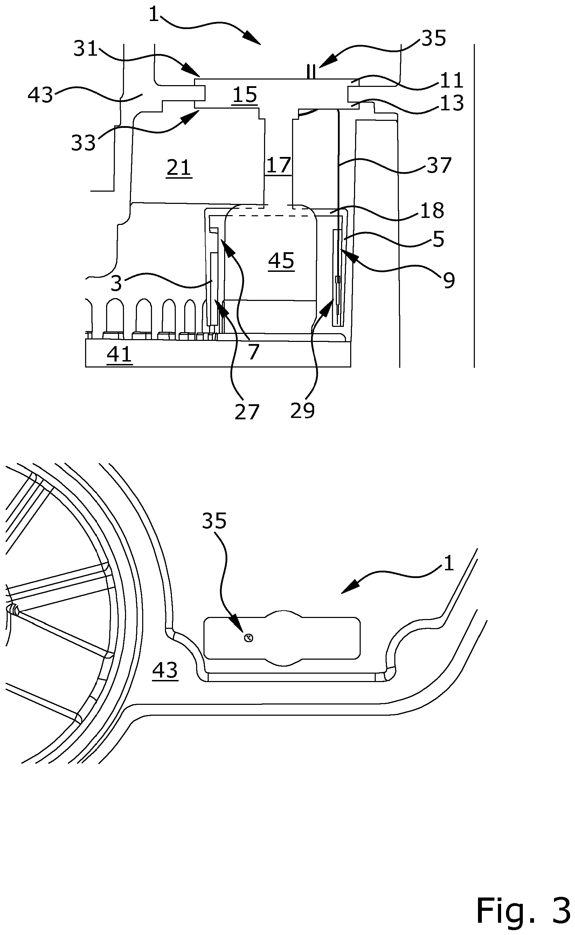

Figur 3 zeigt die Temperaturerfassungseinheit 1 eingebaut in ein Lagerschild 43 eines Elektromotors in einer Queransicht und einer Draufsicht. Die beiden Füße 3, 5 umschließen den Wicklungskopf 45 eines Stators 41. Die Temperatursensoren 27, 29 sind somit in der Nähe des Wicklungskopfes 45 am Stator 41 angeordnet. Das Querelement 18 ist in den Wicklungskopf 45 hineingedrückt und befestigt.

Mit dieser Ausführungsform ist es möglich die Temperatur der Windung am Innen- und Außendurchmesser des Wicklungskopfes 45 zu messen.

Ferner stellen die Dichtelemente 11, 13, die an der Platte 15 angeordnet sind eine Wirkverbindung mit dem Lagerschild 43 her. Durch diese Wirkverbindung wird das Eindringen von Feuchtigkeit in den Stator 41 verhindert.

Beispielsweise ist der Durchmesser der Dichtelemente 11, 15 größer als der Durchmesser der Platte 15 und der Ausnehmung innerhalb des Lagerschilds 43, sodass die Dichtelemente 11, 13 das Lagerschild 43 in den Bereichen 31, 33 überlappen und dadurch die Dichtigkeit herstellen.

Die Dichtelemente 11, 13 und das Querelement 18 verleihen der Temperaturerfassungseinheit 1 Halt im Lagerschild 43. Die Dichtelemente sind beispielsweise aus flexiblem Material hergestellt. Ferner kann das untere Dichtelement 13 ein Herausfallen der Temperaturerfassungseinheit aus dem Lagerschild verhindern.

Das Lagerschild 43 weist des Weiteren einen Raum 21 zwischen den Wicklungsköpfen 45 und der Platte 15 auf. In diesem Bereich kann beispielsweise eine nicht gezeigte Schaltungsplatte angeordnet sein. Das Stützelement 17 verbindet die Füße 3, 5 über das Querelement 18 mit der Platte, sodass durch eine Zugkraft an der Platte 15, bzw. am Dichtelement 11 die Temperaturerfassungseinheit 1 aus dem Stator 41 entfernt werden kann.

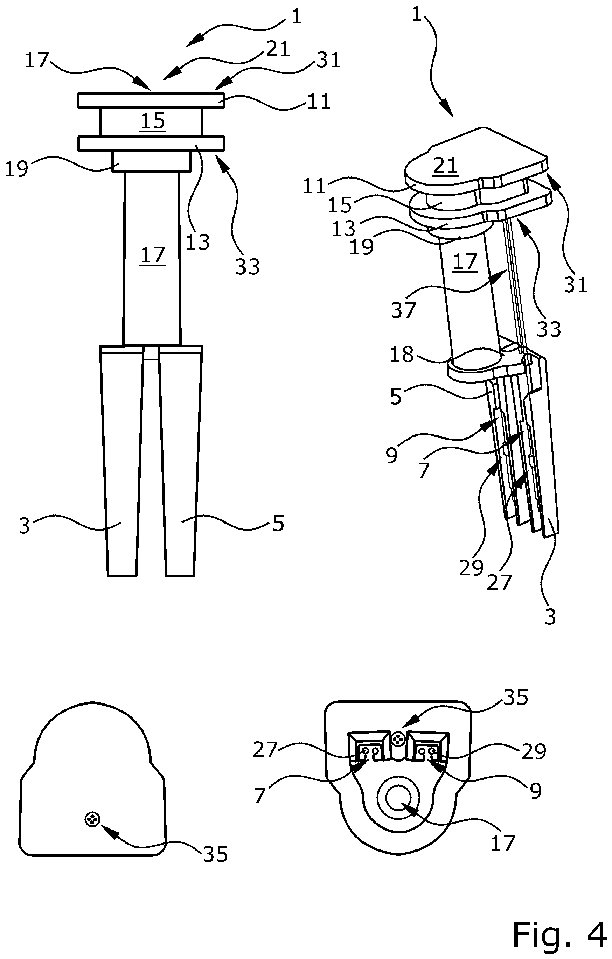

Figur 4 zeigt eine alternative Ausführungsform der Temperaturerfassungseinheit 1. Wie durch einen Vergleich mit Figur 3 ersichtlich ist, sind die Füßen 3, 5 nicht gegenüber sondern nebeneinander angeordnet. Dementsprechend sind die Temperatursensoren 27, 29 ebenfalls nebeneinander in unterschiedlichen Ausnehmungen 7, 9 angeordnet.

Mit dieser Ausführungsform der Temperaturerfassungseinheit 1 lässt sich die Temperatur von Wicklungen auf einer Seite des Stators messen, also entweder am Innendurchmesser oder Außendurchmesser des Wicklungskopfes.

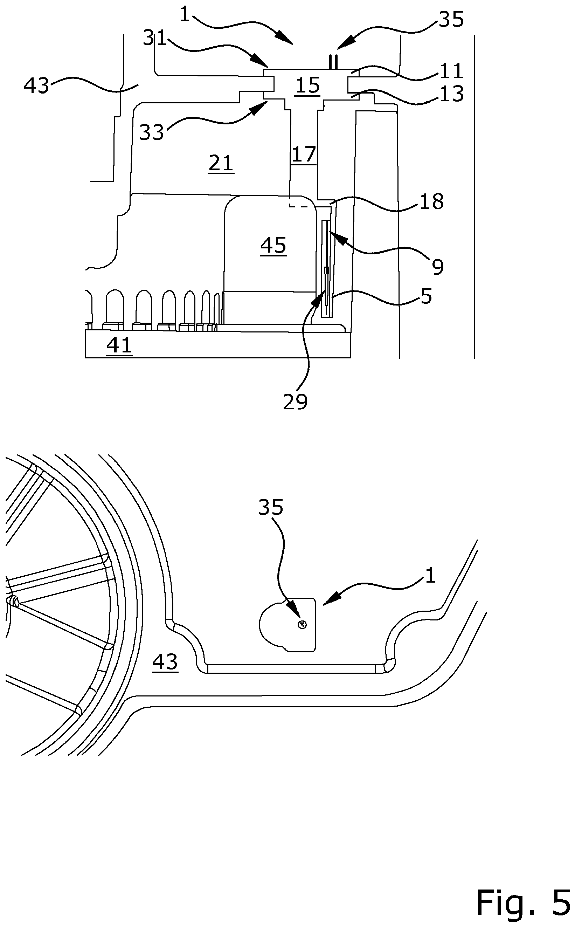

Figur 5 zeigt eine alternative Ausführungsform der Temperaturerfassungseinheit 1 eingebaut in einem Lagerschild 43 eines Elektromotors in einer Queransicht und einer Draufsicht. Die beiden Füße 3, 5 liegen am Außendurchmesser des Wicklungskopf 45 eines Stators 41 an. Die Temperatursensoren 27, 29 sind somit in der Nähe des Wicklungskopfes 45 am Stator 41 angeordnet. Das Querelement 18 ist in den Wicklungskopf 45 hineingedrückt und befestigt.

Ferner stellen die Dichtelemente 11, 13, die an der Platte 15 angeordnet sind eine Wirkverbindung mit dem Lagerschild 43 her. Durch diese Wirkverbindung wird das Eindringen von Feuchtigkeit in den Stator 41 verhindert.

Beispielsweise ist der Durchmesser der Dichtelemente 11, 15 größer als der Durchmesser der Platte 15 und der Ausnehmung innerhalb des Lagerschilds 43, sodass die Dichtelemente 11, 13 das Lagerschild 43 in den Bereichen 31, 33 überlappen und dadurch die Dichtigkeit herstellen.

Die Dichtelemente 11, 13 und das Querelement 18 verleihen der alternative Ausführungsform der Temperaturerfassungseinheit 1 Halt im Lagerschild 43. Die Dichtelemente sind beispielsweise aus flexiblem Material hergestellt. Ferner kann das untere Dichtelement 13 ein Herausfallen der Temperaturerfassungseinheit aus dem Lagerschild verhindern.

Das Lagerschild 43 weist des Weiteren einen Raum 21 zwischen den Wicklungsköpfen 45 und der Platte 15 auf. In diesem Bereich kann beispielsweise eine nicht gezeigte Schaltungsplatte angeordnet sein. Das Stützelement 17 verbindet die Füße 3, 5 über das Querelement 18 mit der Platte, sodass durch eine Zugkraft an der Platte 15, bzw. am Dichtelement 11 die Temperaturerfassungseinheit 1 aus dem Stator 41 entfernt werden kann.

Selbstverständlich lassen sich die Ausführungsformen der Figur 1 und 4 kombinieren. Die kombinierte Ausführungsform weist drei Füße und drei Temperatursensoren auf, wobei die Temperatur sowohl am Innen- und Außendurchmesser des Wicklungskopfes als auch an verschiedenen Wicklungen auf einer Seite gemessen werden können.

Zusätzlich ist es auch möglich die Ausführungsformen der Figur 1 und 4 so zu kombinieren, dass eine Temperaturerfassungseinheit mit vier Füßen und vier Temperatursensoren entsteht. Diese Ausführungsform kann die Temperatur sowohl am Innen- und Außendurchmesser des Wicklungskopfes als auch an verschiedenen Wicklungen auf beiden Seiten des Wicklungskopfs messen.

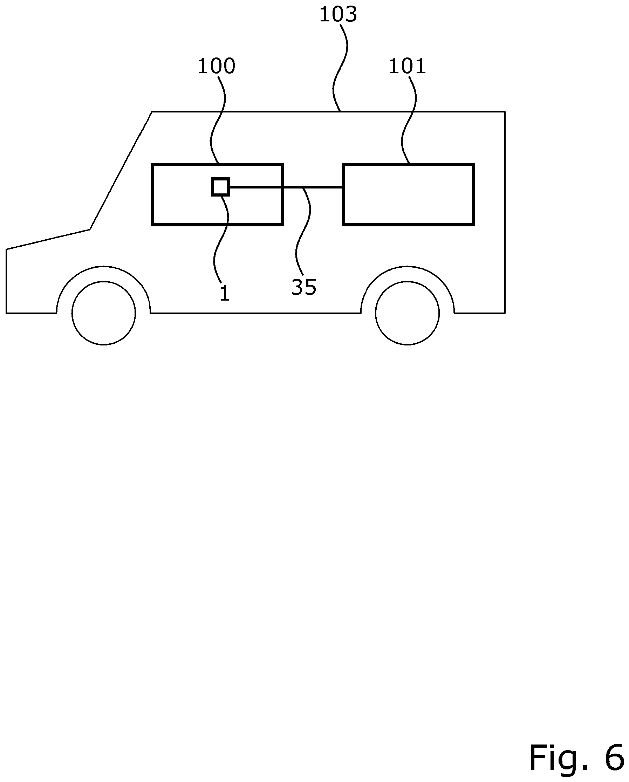

Figur 6 zeigt ein Fahrzeug 103 mit einem Elektromotor 100 und einer Temperaturerfassungseinheit 1. Die Temperaturerfassungseinheit 1 ist über mindestens einen Leiter 35 mit einer Steuereinheit 101 verbunden.

## Patentansprüche

1. Elektromotor (100) umfassend einen Stator (41) mit einem Wicklungskopf (45), einem Lagerschild (43) und einer Temperaturerfassungseinheit (1), welche umfasst:
- eine Platte (15), die in Wirkverbindung mit dem Lagerschild (43) steht,
- mindestens ein Dichtelement (11, 13), das an der Platte (15) angeordnet ist, einen über die Platte hinausstehenden Bereich aufweist und eine Wirkverbindung mit dem Lagerschild (43) herstellt, sodass ein Eindringen von Feuchtigkeit in den Stator (41) verhindert wird,
- ein Stützelement (17),
- mindestens zwei Füße (3, 5), die am Wicklungskopf (45) anliegen,
- mindestens zwei Temperatursensoren (27, 29), wobei jeweils ein Temperatursensor (27, 29) an jeweils einem der Füße (3, 5) angeordnet ist, und
- ein Querelement (18), das zwischen dem Stützelement (17) und den Füßen (3, 5) angeordnet ist und das die Füße (3, 5) beabstandet, wobei das Stützelement (17) die Füße (3, 5) über das Querelement (18) mit der Platte (12) verbindet.

2. Elektromotor (100) gemäß einem der vorherigen Ansprüche, wobei die Füße (3, 5) jeweils eine Ausnehmung (7, 9) aufweisen und in jeder dieser Ausnehmungen (7, 9) mindestens ein Temperatursensor (27, 29) angeordnet ist.

3. Elektromotor (100) gemäß einem der vorherigen Ansprüche, wobei zwischen der Platte (15) und dem Stützelement (17) ein weiteres Dichtelement (19) angeordnet ist.

4. Elektromotor (100) gemäß einem der vorherigen Ansprüche, wobei durch die Füße (3, 5) und das die Platte (15) durchstoßende Stützelement (17) ein Kanal verläuft und in diesem Kanal ein Leiter (35, 37, 39) geführt ist.

5. Elektromotor (100) gemäß einem der vorherigen Ansprüche, wobei das Querelement (18) auf dem Wicklungskopf (45) aufliegt oder teilweise in den Wicklungskopf (45) eingedrückt ist.

6. Elektromotor (100) gemäß einem der vorherigen Ansprüche, wobei das Stützelement (17) in einem Raum (21) zwischen Wicklungskopf (45) und Lagerschild (43) angeordnet ist.

7. Fahrzeug mit einem Elektromotor gemäß einem der vorherigen Ansprüche.

## Claims

1. Electric motor (100) comprising a stator (41) having a winding head (45), a bearing shield (43) and a temperature detection unit (1) which comprises:
- a plate (15) which is operatively connected to the bearing shield (43);
- at least one sealing element (11, 13) which is disposed on the plate (15), has a region projecting beyond the plate and establishes an operative connection to the bearing shield (43) such that ingress of moisture into the stator (41) is prevented;
- a support element (17);
- at least two feet (3, 5) which bear on the winding head (45);
- at least two temperature sensors (27, 29), wherein one temperature sensor (27, 29) is in each case disposed on each of the feet (3, 5) ; and
- a transverse element (18) which is disposed between the support element (17) and the feet (3, 5) and spaces apart the feet (3, 5),
wherein the support element (17) by way of the transverse element (18) connects the feet (3, 5) to the plate (12).

2. Electric motor (100) according to the preceding claim, wherein the feet (3, 5) have in each case one recess (7, 9), and at least one temperature sensor (27, 29) is disposed in each of these recesses (7, 9) .

3. Electric motor (100) according to one of the preceding claims, wherein a further sealing element (19) is disposed between the plate (15) and the support element (17).

4. Electric motor (100) according to one of the preceding claims, wherein a duct runs through the feet (3, 5) and the support element (17) that penetrates the plate (15), and a conductor (35, 37, 39) is routed in this duct.

5. Electric motor (100) according to one of the preceding claims, wherein the transverse element (18) bears on the winding head (45) or is partially indented in the winding head (45).

6. Electric motor (100) according to one of the preceding claims, wherein the support element (17) is disposed in a space (21) between the winding head (45) and the bearing shield (43).

7. Vehicle having an electric motor according to one of the preceding claims.

## Revendications

1. Moteur électrique (100), comprenant un stator (41) pourvu d'une tête de bobine (45), d'un flasque (43) et d'une unité de détection de température (1) qui comprend :
- une plaque (15) en liaison fonctionnelle avec le flasque (43),
- au moins un élément d'étanchéité (11, 13) qui est disposé sur la plaque (15), présente une zone dépassant de la plaque et établit une liaison fonctionnelle avec le flasque (43) de façon à empêcher l'humidité de pénétrer dans le stator (41),
- un élément de support (17),
- au moins deux pieds (3, 5) adjacents à la tête de bobine (45),
- au moins deux capteurs de température (27, 29), respectivement un capteur de température (27, 29) étant disposé sur respectivement l'un des pieds (3, 5), et
- un élément transversal (18) qui est disposé entre l'élément de support (17) et les pieds (3, 5) et qui écarte les pieds (3, 5),
l'élément de support (17) reliant les pieds (3, 5) à la plaque (12) par l'intermédiaire de l'élément transversal (18).

2. Moteur électrique (100) selon la revendication précédente, dans lequel les pieds (3, 5) présentent respectivement un évidement (7, 9), et au moins un capteur de température (27, 29) est disposé dans chacun de ces évidements (7, 9).

3. Moteur électrique (100) selon l'une quelconque des revendications précédentes, dans lequel un autre élément d'étanchéité (19) est disposé entre la plaque (15) et l'élément de support (17).

4. Moteur électrique (100) selon l'une quelconque des revendications précédentes, dans lequel un canal s'étend à travers les pieds (3, 5) et l'élément de support (17) passant à travers la plaque (15), et un conducteur (35, 37, 39) est guidé dans ce canal.

5. Moteur électrique (100) selon l'une quelconque des revendications précédentes, dans lequel l'élément transversal (18) repose sur la tête de bobine (45) ou est partiellement enfoncé dans la tête de bobine (45).

6. Moteur électrique (100) selon l'une quelconque des revendications précédentes, dans lequel l'élément de support (17) est disposé dans un espace (21) entre la tête de bobine (45) et le flasque (43).

7. Véhicule, comprenant un moteur électrique selon l'une quelconque des revendications précédentes.
